# FASCICULE DE BREVET EUROPEEN

(11) **EP 3 022 072 B1**
(45) Date de publication et mention de la délivrance du brevet: **07.06.2017**
(21) Numéro de dépôt: 14780532.9
(22) Date de dépôt: 13.07.2014
(51) Int. Cl.: B60D 1/173, B62D 13/02

(54) **ENSEMBLE ROUTIER**
STRASSENFAHRZEUG
ROAD VEHICLE

(30) Priorité: 17.07.2013 FR 1301685
(43) Date de publication de la demande: 25.05.2016
(73) Titulaire: Joseph, Pascal Henri, 94380 Bonneuil Sur Marne (FR)
(72) Inventeur: Joseph, Pascal Henri, 94380 Bonneuil Sur Marne (FR)
(86) Numéro de dépôt international: PCT/FR2014/000163
(87) Numéro de publication internationale: WO 2015/007959

(56) Documents cités:
- EP-A2- 2 353 970
- FR-A- 1 335 641
- US-A- 3 033 593
- US-A1- 2010 181 743

## Description

L'invention porte sur un ensemble routier du type comprenant un véhicule tracteur, une remorque et un système de liaison entre le véhicule tracteur et la remorque, le système de liaison comprenant un dispositif d'attelage comprenant des moyens d'accrochage interposés entre un châssis du véhicule tracteur et la remorque.

Le document EP 2,151,373 (MAXICARGO) décrit un ensemble routier comprenant un véhicule tracteur, une remorque et un système de liaison entre le véhicule tracteur et la remorque. Le système de liaison comprend un dispositif d'attelage comprenant des moyens d'accrochage montés sur un châssis du véhicule tracteur, en avant de l'essieu arrière, aptes à coopérer avec des moyens d'accrochage complémentaires de la remorque pour accrocher la remorque au véhicule tracteur dans une position dite accrochée de la remorque, de sorte que la remorque soit articulée sur le véhicule tracteur au moins autour d'un axe transversal de tangage sensiblement horizontal en avant de l'essieu arrière du véhicule tracteur. Le système de liaison comprend en outre un dispositif de maintien et de guidage comprenant des moyens de maintien et de guidage montés sur un premier élément parmi la remorque et le véhicule tracteur, aptes à coopérer dans la position accrochée de la remorque, avec des moyens de maintien et de guidage complémentaires montés sur le deuxième élément pour d'une part maintenir de manière permanente les plans longitudinaux verticaux du véhicule tracteur et de la remorque sensiblement confondus lors de la conduite sur route, et, d'autre part, guider de manière permanente le pivotement de la remorque autour de l'axe transversal, la remorque comprenant au moins un timon d'attelage équipé à son extrémité libre des moyens d'accrochage complémentaires. Le préambule de la revendication 1 est montré dans document US 2010/0181743 A1.

Les moyens de maintien et de guidage comprennent un support monté pivotant, autour d'un premier axe transversal sensiblement horizontal sur le premier élément, et portant au moins un organe de maintien et de guidage décalé longitudinalement par rapport audit premier axe transversal. Les moyens de maintien et de guidage complémentaires comprennent au moins une glissière longitudinale fixée au deuxième élément dans laquelle ledit organe est apte à coulisser dans la position accrochée de la remorque.

Les moyens de maintien et de guidage comprennent deux vérins montés sensiblement verticalement, symétriquement de part et d'autre du plan longitudinal du premier élément. Chaque vérin comprend un cylindre, un piston monté coulissant dans ledit cylindre et définissant une chambre supérieure et une chambre inférieure, une tige de piston traversant de manière étanche ledit cylindre de chaque côté et présentant deux extrémités libres par lesquelles ledit vérin est fixé audit premier élément. Les chambres supérieure et inférieure d'un premier vérin sont en communication fluidique respectivement avec les chambres inférieure et supérieure du deuxième vérin, chaque cylindre portant extérieurement un tube longitudinal, lesdits moyens de maintien et de guidage complémentaires comprenant deux plots longitudinaux montés fixes sur le deuxième élément et symétriquement de part et d'autre de son plan longitudinal, lesdits plots étant aptes à s'engager et à coulisser dans lesdits tubes longitudinaux.

Par ailleurs, parmi les véhicules utilitaires ayant un PTAC de 3,5 tonnes, il existe des véhicules utilitaires de type châssis cabine, généralement acquis chez un concessionnaire de marque, qui peuvent ensuite être équipés d'une carrosserie, telle que par exemple une benne, une caisse frigorifique, une caisse grand volume, une grue, une citerne, un plateau, etc... Ce type de véhicule peut-être piloté par une personne en possession du permis B, mais sa charge utile maximale est souvent jugée insuffisantes par les utilisateurs. En effet, le poids à vide du véhicule utilitaire carrossé peut atteindre dans certains cas 2,5 à 3 tonnes, réduisant ainsi la charge utile à moins de 1 tonne ce qui peut paraître très limité en comparaison du volume de chargement disponible.

Différentes solutions existent pour bénéficier d'une charge utile supérieure.

Ainsi, une première solution consiste à utiliser des véhicules de type petits poids lourds de PTAC de l'ordre de 5 tonnes. Cette solution présente un certain nombre d'inconvénients, notamment la nécessité de posséder le permis C, la gestion des disques du tachygraphe, les contrôles techniques annuels, les contrôles routiers fréquents, et les restrictions de circulation les week-ends et jours fériés ainsi qu'en zones urbaines.

Une autre solution permet d'augmenter de façon économique la charge transportée par un véhicule utilitaire carrossé de 3,5 T, par l'utilisation d'une remorque attelée dont le centre de gravité est situé sensiblement au-dessus de ses propres essieux porteurs et dont le point d'attelage au véhicule tracteur est situé en avant de la remorque et en arrière de l'essieu arrière du véhicule tracteur. Le permis E permet de tracter une remorque de plus de 750 kg dans la limite du poids total roulant autorisé (PTRA) du véhicule tracteur. Dans le cas des véhicules utilitaires de 3,5 T maximum, ce PTRA peut aller de 5 T à 9 T. La possession des permis B + E permet donc de conduire légalement un ensemble routier articulé de catégorie utilitaire ayant une charge utile nettement plus importante que celle du porteur utilisé seul, sans sa remorque. Ce PTRA peut, par comparaison, être l'équivalent du PTAC d'un petit poids lourd. Cette solution avantageuse présente toutefois un certain nombre d'inconvénients, notamment l'encombrement supplémentaire, la difficulté des manoeuvres due à l'articulation entre le véhicule et sa remorque, le décrochage de la remorque pour vider le véhicule tracteur ainsi qu'une moindre stabilité sur route.

Le but de la présente invention est donc de proposer un ensemble routier qui vise à pallier au moins l'un des inconvénients précités, qui notamment pour les véhicules dits utilitaires, présente une charge utile de l'ordre du double d'un véhicule utilitaire du type porteur benne ou plateau classique et de l'ordre de celle d'un petit poids lourd, et/ou ne nécessite pas de posséder un permis de catégorie C mais seulement le permis BE.

Dans sa généralité, la présente invention propose un ensemble routier rattaché au domaine des véhicules de la catégorie " utilitaires " et des véhicules de la catégorie " poids lourds ", selon la revendication 1 comprenant un véhicule tracteur, une remorque et un système de liaison entre ledit véhicule tracteur et la remorque, ledit système de liaison comprenant un dispositif d'attelage comprenant des moyens d'accrochage montés sur le châssis du véhicule tracteur, en arrière de l'essieu arrière, aptes à coopérer avec des moyens d'accrochage complémentaires de la remorque pour accrocher la remorque au véhicule tracteur dans une position dite accrochée de la remorque, de sorte que la remorque soit articulée sur le véhicule tracteur au moins autour d'un axe transversal de tangage sensiblement horizontal en avant de l'essieu arrière du véhicule tracteur. Ledit système de liaison comprend en outre un dispositif de maintien et de guidage comprenant des moyens de maintien et de guidage montés sur un premier élément parmi la remorque et le véhicule tracteur, aptes à coopérer dans la position accrochée de la remorque, avec des moyens de maintien et de guidage complémentaires montés sur le deuxième élément pour d'une part maintenir, de manière permanente, les plans longitudinaux verticaux du véhicule tracteur et de la remorque sensiblement confondus, lors de la conduite sur route, et, d'autre part, guider, de manière permanente ou semi permanente, le pivotement de la remorque autour dudit axe transversal de tangage.

Selon la présente invention, le système de liaison comprend un dispositif de maintien et de guidage, agissant par exemple sensiblement entre l'essieu arrière du véhicule tracteur et l'essieu avant de la remorque, appelé également premier essieu de la remorque, permettant l'unique mouvement de tangage de la remorque, dans le plan médian longitudinal vertical du véhicule tracteur, autour de l'axe transversal de tangage. Autrement dit, le dispositif de maintien et de guidage permet un maintien et un guidage permanents de la partie arrière de la remorque pendant la marche normale sur route, et a pour rôle de maintenir les plans médians longitudinaux verticaux du véhicule tracteur et de la remorque sensiblement confondus entre eux, et ainsi limiter, voire supprimer, les mouvements angulaires horizontaux tels que les désalignements provoqués par le braquage du véhicule tracteur ou mouvements de lacets, et les mouvement de roulis de la remorque par rapport à son véhicule tracteur, et de réaliser un guidage dynamique des mouvements relatifs dans le plan longitudinal vertical de la remorque par rapport à son véhicule tracteur en marche normale sur route. Selon l'invention, on entend par " remorque ", une remorque dont le point d'attelage ou d'accrochage se situe près de l'essieu arrière du véhicule tracteur.

Pour un véhicule donné, la charge utile est maximale car elle est l'addition de celle du véhicule tracteur et de celle de la remorque. L'action permanente du dispositif de maintien et de guidage, entre le véhicule tracteur et sa remorque, procure en outre à cet ensemble routier la même facilité de pilotage et le même comportement routier qu'un véhicule porteur non articulé. Par construction, l'entraxe du dernier essieu du véhicule tracteur et du premier essieu de la remorque, peuvent être modulés, selon l'invention, pour augmenter l'encombrement en longueur de l'ensemble routier en limitant le phénomène de ripage des pneus lors des virages.

Cet ensemble routier peut présenter un gabarit équivalent à celui d'un véhicule 3,5 tonnes classique.

Pour un encombrement sensiblement identique, la charge utile du véhicule selon l'invention, sera environ le double de celle d'un véhicule utilitaire 3,5 tonnes carrossé de en benne ou plateau (2 à 3 tonnes au lieu de 1 à 1,5 tonne). Le coût de revient kilogramme/kilomètre du transport de marchandises de l'ensemble routier selon l'invention est plus économique que celui d'un véhicule 3,5 tonnes classique ou d'un poids lourd, en particulier pour les courtes distances, tout en gardant sa fonction première de transport.

Le dispositif de maintien et de guidage peut agir, sensiblement entre l'essieu arrière du véhicule tracteur et l'essieu avant de la remorque, derrière l'essieu avant de la remorque, et/ou devant l'essieu arrière du véhicule tracteur. Dans la position accrochée de la remorque, lesdits moyens de maintien et de guidage sont ainsi aptes à coopérer, sensiblement entre l'essieu arrière du véhicule tracteur et l'essieu avant, derrière l'essieu avant de la remorque, et/ou devant l'essieu arrière du véhicule tracteur, de préférence sensiblement entre lesdits essieux, avec lesdits moyens de maintien et de guidage complémentaires pour maintenir les plans longitudinaux verticaux sensiblement confondus et guider le pivotement de la remorque autour dudit axe transversal.

Selon un mode de réalisation, les moyens de maintien et de guidage comprennent deux vérins montés pivotant autour d'un premier axe transversal sensiblement horizontal, sur le premier élément parmi la remorque et le véhicule tracteur, et portant au moins deux organes de maintien et de guidage parallèle longitudinalement par rapport audit premier axe transversal, les moyens de maintien et de guidage complémentaires comprenant au moins deux axes de piston au bout desquels se trouvent deux anneaux fixés au deuxième élément dans lequel ledit organe est apte à coulisser dans la position accrochée de la remorque, lesdits vérins assurant un maintien vertical et latéral dudit organe, ledit organe pouvant éventuellement coulisser dans lesdits vérins lors des mouvements de tangage.

Selon un mode de réalisation, la remorque comprend au moins un timon d'attelage équipé à son extrémité libre desdits moyens d'accrochage complémentaires, en particulier sous la forme d'un anneau d'accrochage, ledit timon d'attelage étant avantageusement de type télescopique à freinage par inertie, ledit organe coulissant dans lesdits vérins lors de l'extension/contraction du timon d'attelage. Le dispositif de maintien et de guidage selon l'invention permet l'utilisation d'une remorque simple, peu onéreuse, équipée d'un timon d'attelage télescopique à freinage par inertie situé sur l'axe longitudinal de la remorque.

Selon un mode de réalisation, lesdits vérins portent deux organes formés de deux rotules montées articulées autour d'un second axe transversal parallèle au premier axe transversal et décalé longitudinalement par rapport à ce dernier, les deux rotules étant fixées de manière définitive. Les deux rotules peuvent être montées sur le châssis de la remorque, de sorte que le second axe de la remorque, les vérins étant montés amovibles sur la partie arrière du châssis du véhicule tracteur, en amont de l'essieu arrière.

Selon un autre mode de réalisation, lesdits moyens d'accrochage fixés au châssis du véhicule tracteur comprennent deux dispositifs d'attelage montés symétriquement de part et d'autre du plan transversal du premier élément, les parties avant des vérins constitués en leur extrémités d'anneaux d'accrochage constituant deux organes aptes à venir s'engager dans lesdits moyens d'accrochage et de guidage complémentaires formés de deux dispositifs d'attelage automatique montés fixes symétriquement de part et d'autre du plan longitudinal.

A partir d'un véhicule déjà connu et commercialisé, le mode de réalisation de la présente invention comprend deux vérins hydrauliques parallèles au plan longitudinal, fonctionnant à l'horizontal, dont l'une des extrémités est pourvue est pourvue d'une rotule fixée sur le châssis de la remorque, de manière permanente. L'autre extrémité des vérins est pourvue d'un anneau d'accrochage en bout d'axe de piston, eux-mêmes aptes à s'engager dans des dispositifs d'attelage automatique, fixés sur le châssis du véhicule tracteur en deux points, de part et d'autre d'un dispositif central similaire, ou vient s'engager un anneau de couplage du timon télescopique commandant le système de freinage inertie de la remorque, lui-même décalé sur le plan horizontal. Les vérins sont reliés entre eux par deux circuits hydrauliques communiquant par opposition, la chambre supérieure droite du vérin droit communiquant avec la chambre inférieure gauche du vérin gauche, de façon à répliquer leurs mouvements l'un par rapport à l'autre. La sécurité du circuit hydraulique est assuré par une chambre de compensation équipée de deux ressorts tarés à une certaine pression, entre lesquels se trouve un piston connecté aux deux circuits hydrauliques de communication desdits vérins. En cas de surpression du à un mouvement inverse desdits vérins, l'un des ressorts taré à une certaine pression va se déformer sous l'effet de la pression exercée à la surface du piston, qui va se déplacer pour compenser les volumes déplacés, et ainsi éviter l'éclatement du système hydraulique, en synchronisant l'avancé d'un des vérins et le recul de l'autre.

Le système hydraulique est avantageusement conçu pour ne pas perturber ledit timon télescopique commandant le système de freinage à inertie.

Selon une autre approche de la présente invention, l'ensemble routier de la présente invention est un ensemble routier comprenant un véhicule tracteur, une remorque et un système de liaison entre le véhicule tracteur et la remorque. Le système de liaison comprend un dispositif d'attelage comprenant des moyens d'accrochage interposés entre un châssis du véhicule tracteur et la remorque.

Selon la présente invention, les moyens d'accrochage comprennent au moins trois anneaux d'accrochage et deux liaisons rotules.

Les anneaux d'accrochage sont préférentiellement répartis entre deux plans qui sont distincts l'un de l'autre et parallèles entre eux.

De préférence, un plan central comprend un anneau central d'accrochage et en ce qu'un plan latéral comprend deux anneaux latéraux d'accrochage.

De préférence, le plan central est situé à l'avant du plan latéral selon un sens de progression de l'ensemble routier.

Les moyens d'accrochage comprennent avantageusement des vérins qui s'étendent respectivement entre les anneaux latéraux d'accrochage et les liaisons rotules.

De préférence, un vérin gauche comprend une chambre avant gauche et une chambre arrière gauche tandis que le vérin droit comprend une chambre avant droite et une chambre arrière droite, une première canalisation reliant la chambre arrière gauche et la chambre avant droite et une deuxième canalisation reliant la chambre avant gauche et la chambre arrière droite.

Une troisième canalisation relie avantageusement la première canalisation et la deuxième canalisation.

La troisième canalisation est préférentiellement pourvue d'une chambre de compensation.

La remorque comprend préférentiellement une plateforme qui surplombe au moins partiellement un châssis que comporte le véhicule tracteur.

La plateforme est de préférence mobile en rotation autour d'un axe de rotation interposé entre la plateforme et le châssis.

D'autres caractéristiques et avantages de la présente invention apparaîtront à la lecture de la description qui va en être faite d'exemples de réalisation, en relation avec les figures des planches annexées, dans lesquelles :
La figure 1 est une vue schématique d'un ensemble routier de la présente invention.
La figure 2 est une vue schématique d'un circuit hydraulique équipant l'ensemble routier illustré sur la figure précédente.
La figure 3 est une vue schématique de moyens de commande du circuit hydraulique illustré sur la figure 2.
La figure 4 est une vue schématique du circuit hydraulique représenté sur les figures 2 et 3.

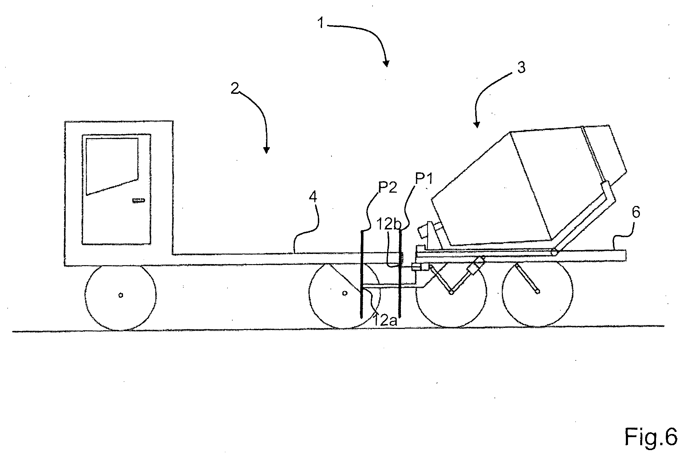

Les figures 5 et 6 sont des illustrations schématiques de variantes de réalisation de l'ensemble routier illustré sur la figure 1.

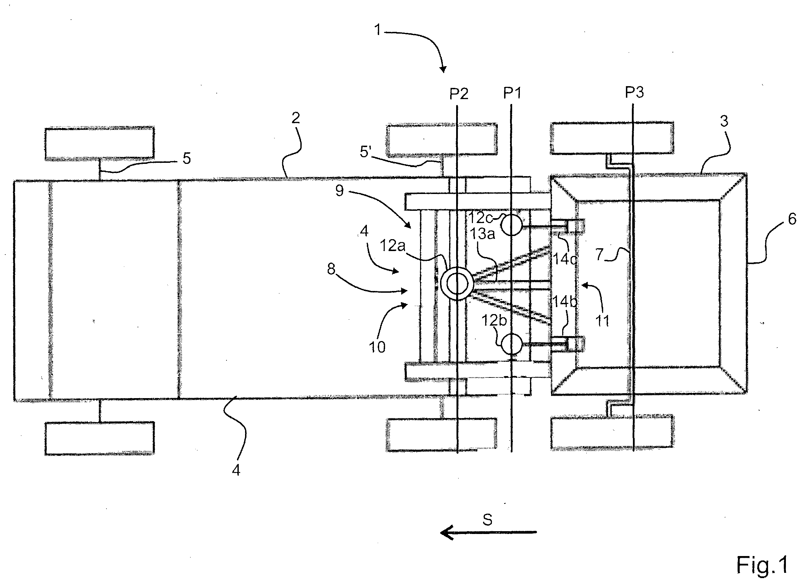

Sur la figure 1, un ensemble routier 1 comprend un véhicule tracteur 2 et une remorque 3. Le véhicule tracteur 2 comprend un châssis 4 qui est porté par deux essieux 5,5' dont un essieu avant 5 et un essieu arrière 5'. La remorque 3 comprend une plateforme 6 portée par au moins un essieu de remorque 7. La remorque 3 est indifféremment une remorque comportant deux essieux comme illustré sur la figure 1 ou bien une remorque comportant un essieu unique. La plateforme 6 est préférentiellement équipée d'une benne, d'une toupie ou analogue.

Un système de liaison 8 permet un raccordement de la remorque 3 au véhicule tracteur 2, un tel raccordement étant mécanique et/ou électrique et/ou hydraulique ou analogue. A cet effet, le système de liaison 8 comprend un dispositif d'attelage 9 qui permet un attelage réversible de la remorque 3 sur le véhicule tracteur 2. Le dispositif d'attelage 9 comprend des moyens d'accrochage primaires 10 qui sont montés sur le châssis 4 et des moyens d'accrochage complémentaires 11 qui sont solidaires de la remorque 3. En une position accrochée de la remorque 3 au véhicule tracteur 2, les moyens d'accrochage primaires 10 et les moyens d'accrochage complémentaires 11 sont solidarisés les uns avec les autres de manière réversible.

Le dispositif d'attelage 9 comprend trois anneaux d'accrochage 12a, 12b, 12c dont un anneau central d'accrochage 12a et deux anneaux d'accrochage latéraux 12b,12c, soit un anneau d'accrochage latéral gauche 12b et un anneau d'accrochage latéral droit 12c. Les anneaux d'accrochage latéraux 12b, 12c sont disposées de part et d'autre de l'anneau d'accrochage central 12a. Les anneaux d'accrochage latéraux 12b,12c sont situés à l'intérieur d'un plan latéral P1 qui est interposé entre un plan central P2 qui contient l'anneau central d'accrochage 12a et un plan d'essieu P3 qui contient l'essieu de remorque 7. Le plan central P2 est situé à l'avant du plan latéral P1 selon un sens de progression S de l'ensemble routier 1, le sens de progression S étant le sens d'avancement courant de l'ensemble routier 1, couramment dénommé marche avant.

Les anneaux d'accrochage 12a, 12b, 12c sont notamment affectés au châssis 4 et sont constitutifs des moyens d'accrochage primaires 10. Plus particulièrement, l'anneau d'accrochage central 12a est relié à la remorque 3 par l'intermédiaire d'un bras principal 13a pourvu de bras de renforts 13b,13c, les bras 13a, 13b, 13c étant fixés à la remorque 3. Le bras principal 13a est préférentiellement équipé d'une commande à frein à inertie 103. Plus particulièrement encore, l'anneau d'accrochage latéral gauche 12b est relié à la remorque 3 par l'intermédiaire d'un vérin latéral gauche 14b. Plus particulièrement encore, l'anneau d'accrochage latéral droit 12c est relié à la remorque 3 par l'intermédiaire d'un vérin latéral droit 14c. Les vérins latéraux 14b,14c sont fixés sur un support de l'essieu de remorque 7. Plus particulièrement, le vérin latéral gauche 14b est rapporté sur le support de l'essieu de remorque 7 par l'intermédiaire d'une liaison rotule gauche 100b tandis que le vérin latéral droit 14b est rapporté sur le support de l'essieu de remorque 7 par l'intermédiaire d'une liaison rotule droit 100c.

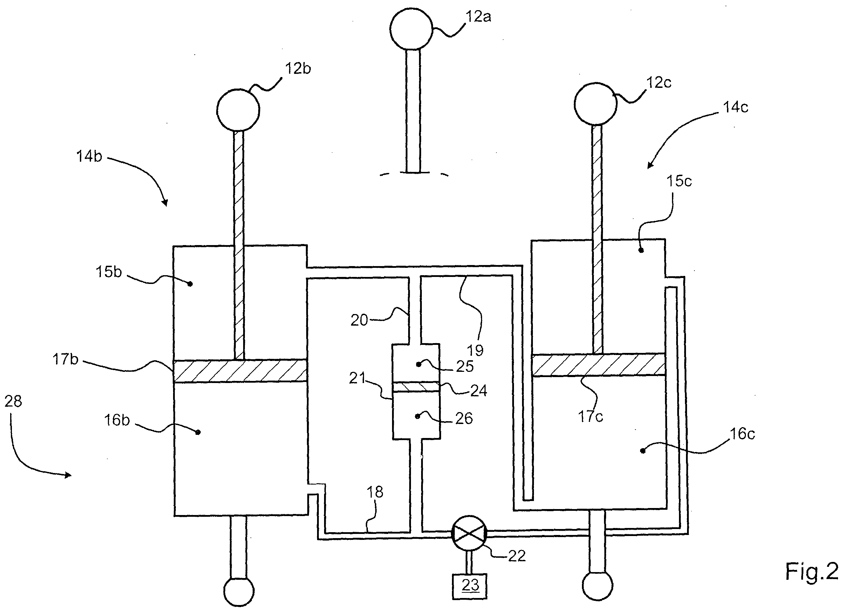

Sur la figure 2, le vérin gauche 14b comprend une chambre avant gauche 15b et une chambre arrière gauche 16b tandis que le vérin droit 14c comprend une chambre avant droite 15c et une chambre arrière droite 16c. La chambre avant gauche 15b et la chambre arrière gauche 16b sont séparées l'une de l'autre par un piston gauche 17b tandis que la chambre avant droite 15c et la chambre arrière droite 16c sont séparées l'une de l'autre par un piston droit 17c.

Une première canalisation 18 relie la chambre arrière gauche 16b et la chambre avant droite 15c. Une deuxième canalisation 19 relie la chambre avant gauche 15b et la chambre arrière droite 16c. La première canalisation 18 est pourvue d'une vanne 22 qui est reliée à un système de frein de stationnement 23 par l'intermédiaire d'une commande de frein de stationnement 23'. Une troisième canalisation 20 relie la première canalisation 18 et la deuxième canalisation 19. La troisième canalisation 20 est équipée d'une chambre de compensation 21 pour équilibrer une circulation d'un fluide à l'intérieur des vérins 14b, 14c et des canalisations 18,19,20. La chambre de compensation 21 loge un piston de compensation 24 qui sépare l'une de l'autre une chambre amont 25 et une chambre aval 26, la chambre amont 25 étant en communication fluidique avec la deuxième canalisation 19. La chambre amont 25 loge préférentiellement un ressort taré. La chambre aval 26 est en communication fluidique avec la première canalisation 18 et loge aussi préférentiellement un ressort taré. Les vérins 14b,14c, les canalisations 18,19,20 et la chambre de compensation 21 forment conjointement un circuit hydraulique 27. Ces moyens permettent, quelle que soit l'oscillation latérale imprévue de la remorque 3, de sécuriser l'ensemble du système de guidage.

Ces dispositions sont telles que les vérins 14b,14c répliquent leur mouvement et actionnent, par l'intermédiaire d'un câble, le système couplé au frein principal lors des mouvements d'avant en arrière ce qui permet à un système de freinage à inertie de fonctionner sans être perturbé et sans autoriser des mouvements de gauche à droite de la remorque 3 avec un système de protection en cas de mouvements opposés à un fonctionnement normal. La chambre de compensation 21 est installée sur la troisième canalisation 20 et la vanne 22 est reliée au système de frein de stationnement 23 de la remorque 3 pour bloquer le circuit hydraulique 27 au moment de l'accrochage et du décrochage de la remorque 3. Il en résulte une facilité d'ancrage de la remorque 3 sur le véhicule tracteur 2.

En fonction de divers paramètres, le circuit hydraulique 27 autorise les mouvements de gauche à droite de la remorque 3 sans perturber le système de freinage à inertie. De tels paramètres sont notamment : une information relative à une marche avant et/ou une marche arrière de l'ensemble routier 1, une information relative à une position d'une direction de mouvement de l'ensemble routier 1, une information relative à une position du vérin gauche 14b, une information relative à une position du vérin droit 14c, une information relative à une vitesse de l'ensemble routier 1, une information relative à un frein de l'ensemble routier 1 et/ou une information relative à une tension d'alimentation de l'ensemble routier 1.

Le circuit hydraulique 27 peut être piloté de façon à autoriser les mouvements de gauche à droite ainsi que pour éviter tout ripage des roues de la remorque 3 lorsque celles-ci tendent à s'éloigner de celles du véhicule tracteur 2. Le circuit hydraulique 27 comprend par ailleurs un premier capteur 101 marche arrière et vitesse et un deuxième capteur 102 relié au volant.

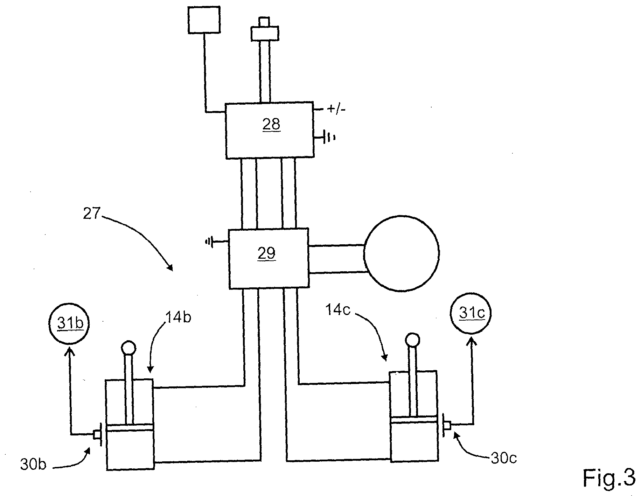

Sur la figure 3, de telles informations sont traitées par un boitier de commande 28 qui pilote un distributeur hydraulique à commande électrique 29 qui pilote les vérins 14b, 14c et sécurise le circuit hydraulique 27. Chaque vérin 14b,14c est équipé d'un capteur de position 30b,30c d'une position du piston respectif 17b,17c que chaque vérin 14b,14c loge. Chaque capteur de position 30b,30c est en relation avec un ensemble de commande respectif 31b,31c du vérin 14b,14c auquel le capteur de position 30b,30c est affecté. Le distributeur hydraulique à commande électrique 29 est en relation avec une pompe hydraulique 32 qui est apte à faire circuler le fluide à l'intérieur du circuit hydraulique 27.

Selon une variante, le circuit hydraulique 27 pilote aussi une suspension de l'essieu de remorque 7 de la remorque 3 lors d'une marche arrière de l'ensemble routier 1 pour délester l'essieu arrière de la remorque lorsque celle-ci est équipée de deux essieux. De telles dispositions facilitent les manoeuvres en marche arrière de l'ensemble routier 1 et sont particulièrement avantageuses lors d'une charge exceptionnellement lourde de l'ensemble routier.

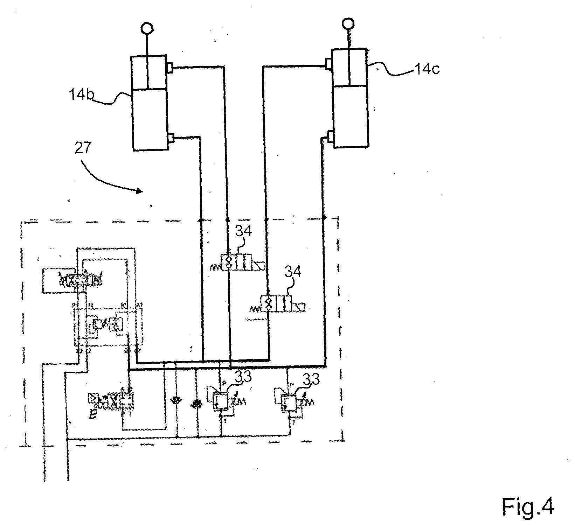

Sur la figure 4, les vérins 14b,14c sont pilotés par le circuit hydraulique 27 qui comprend des premiers éléments 33 qui permettent une précontrainte en pression des vérins 14b,14c et des deuxièmes éléments 34 qui sont constitutifs d'une ligne de blocage des vérins 14b,14c. Un tel circuit hydraulique 27 permet ainsi de contrôler une balance gauche/droite des vérins 14b,14c.

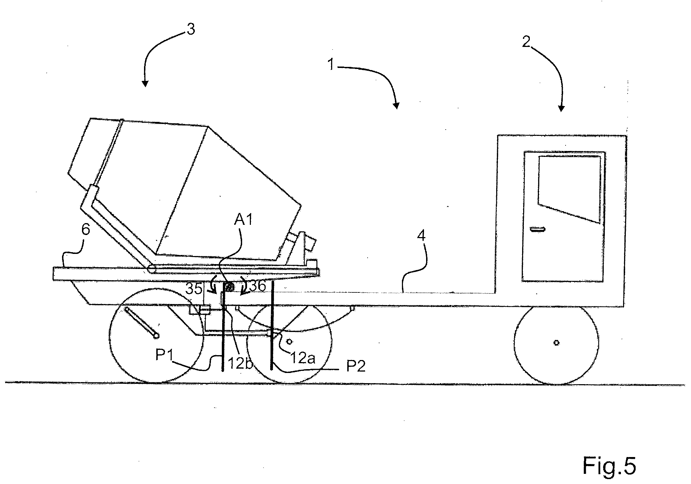

Sur la figure 5, une telle configuration du circuit hydraulique 27 permet à l'anneau central d'accrochage 12a d'être situé le plus bas possible sous le châssis 4 de telle sorte qu'un centre de gravité du dispositif d'attelage soit le plus bas possible, autrement dit le plus proche du sol en position d'utilisation de l'ensemble routier 1. Il découle également de ces dispositions que l'axe de gravité de l'attelage est parfaitement équilibré entre l'essieu arrière 5' et l'essieu de remorque 7.

Par ailleurs, ces dispositions sont telles que la plateforme 6 surplombe au moins partiellement le châssis 4 et que la plateforme 6 est apte à basculer selon un sens trigonométrique 35 ou selon un sens horaire 36 autour d'un axe de rotation A1 qui est interposé entre la plateforme 6 et le châssis 4. Il en résulte une facilité et une sécurité de déplacement de l'ensemble routier 1, y compris dans le cas où le sol sur lequel repose l'ensemble routier 1 est en pente, le plan de plateforme selon lequel la plateforme 6 est ménagée et le plan de châssis selon lequel le châssis 4 est ménagé étant susceptible de former entre eux un angle non nul, indifféremment aigu ou obtus.

Il découle également de ces dispositions que l'ensemble routier 1 est optimisé pour proposer un emplacement entre une cabine du véhicule tracteur 2 et la remorque 3 qui est le plus vaste possible, notamment pour le transport de matériaux. Il découle aussi de ces dispositions lorsque l'élément tracteur 2 est de moyen tonnage, de permettre à des utilisateurs professionnels de bénéficier d'un tracteur 2 attelé par exemple à une toupie à chargement direct de sable, gravier, ciment et eau, qui en cours de transport est mélangé grâce à un moteur prévu à cet effet.

## Revendications

1. Ensemble routier (1) comprenant un véhicule tracteur (2), une remorque (3) et un système de liaison (8) entre le véhicule tracteur (2) et la remorque (3), le système de liaison (8) comprenant un dispositif d'attelage (9) comprenant des moyens d'accrochage (12a,12b,12c,100b,100c,14b,14c) interposés entre un châssis (4) du véhicule tracteur (2) et la remorque (3), **caractérisé en ce que** les moyens d'accrochage (12a,12b,12c,100b,100c,14b,14c) comprennent au moins trois anneaux d'accrochage (12a,12b,12c) et deux liaisons rotules.

2. Ensemble routier (1) selon la revendication précédente, **caractérisé en ce que** les anneaux d'accrochage (12a,12b,12c) sont répartis entre deux plans (P1,P2) qui sont distincts l'un de l'autre et parallèles entre eux.

3. Ensemble routier (1) selon la revendication 2, **caractérisé en ce qu'**un plan central (P2) comprend un anneau central d'accrochage (12a) et **en ce qu'**un plan latéral (P1) comprend deux anneaux latéraux d'accrochage (12b,12c).

4. Ensemble routier (1) selon la revendication 3, **caractérisé en ce que** le plan central (P2) est situé à l'avant du plan latéral (P1) selon un sens de progression (S) de l'ensemble routier (1).

5. Ensemble routier (1) selon l'une quelconque des revendications 3 et 4, **caractérisé en ce que** les moyens d'accrochage (12a,12b,12c,100b,100c,14b,14c) comprennent des vérins (14b,14c) qui s'étendent respectivement entre les anneaux latéraux d'accrochage (12b,12c) et les liaisons rotules.

6. Ensemble routier (1) selon la revendication 5, **caractérisé en ce qu'**un vérin gauche (14b) comprend une chambre avant gauche (15b) et une chambre arrière gauche (16b) tandis que le vérin droit (14c) comprend une chambre avant droite (15c) et une chambre arrière droite (16c), une première canalisation (18) reliant la chambre arrière gauche (16b) et la chambre avant droite (15c) et une deuxième canalisation (19) reliant la chambre avant gauche (15b) et la chambre arrière droite (16c).

7. Ensemble routier (1) selon la revendication 6, **caractérisé en ce qu'**une troisième canalisation (20) relie la première canalisation (18) et la deuxième canalisation (19).

8. Ensemble routier (1) selon la revendication 7, **caractérisé en ce que** la troisième canalisation (20) est pourvue d'une chambre de compensation (21).

9. Ensemble routier (1) selon l'une quelconque des revendications précédentes, **caractérisé en ce que** la remorque (3) comprend une plateforme (6) qui surplombe au moins partiellement un châssis (4) que comporte le véhicule tracteur (2).

10. Ensemble routier (1) selon la revendication 9, **caractérisé en ce que** la plateforme (6) est mobile en rotation autour d'un axe de rotation (A1) interposé entre la plateforme (6) et le châssis (4).

## Patentansprüche

1. Gelenkfahrzeug (1) mit einem Zugfahrzeug (2), einem Anhänger (3) und ein Verbindungssystem (8), die zwischen dem Zugfahrzeug (2) und dem Anhänger (3), das verbindungssystem (8), umfassend eine Kopplungsvorrichtung (9), umfassend Greifmittel (12a, 12b, 12c, 100b, 100c, 14b, 14c), die zwischen einem Fahrgestell (4) des Zugfahrzeugs (2) und dem Anhänger (3) angeordnet ist, **dadurch gekennzeichnet** dadurch, dass die Hakenmittel (12a, 12b, 12c, 100b, 100c, 14b, 14c) mindestens drei Befestigungsringe (12a, 12b, 12c) und zwei Kugelgelenke (100b, 100c),

2. Gelenkfahrzeug (1) nach dem vorhergehenden Anspruch, **dadurch gekennzeichnet, daß** die Befestigungsringe (12a, 12b, 12c) zwischen zwei Ebenen (P1.P2) verteilt sind, die voneinander getrennt sind und parallel sie.

3. es Gelenkfahrzeug (1) nach Anspruch 2, **dadurch gekennzeichnet, dass** eine zentrale Ebene (P2) einen zentralen Ringansatz (12a), und daß eine laterale Ebene (P1) aus zwei seitlichen Ringen aus Montagestruktur (12b, 12c).

4. Gelenkfahrzeug (1) nach Anspruch 3, **dadurch gekennzeichnet, dass** die Mittelebene (P2) vor der lateralen Ebene (P1) in einer Vorschubrichtung liegt (S) des Traktors (1).

5. Gelenkfahrzeug (1) nach einem der Ansprüche 3 und 4, **dadurch gekennzeichnet, dass** die Hakenmittel (12a, 12b, 12c, 100b, 100c, 14b, 14c) umfassen, Stellglieder (14b, 14c) die sich jeweils zwischen den Seitenkupplungsringe (12b, 12c) und Kugelgelenke (100b, 100c).

6. es Gelenkfahrzeug (1) nach Anspruch 5, **dadurch gekennzeichnet, dass** ein linker Zylinder (14b) eine linke vordere Kammer (15b) und eine linke hintere Kammer (16b), während der rechte Zylinder (14c) eine Kammer rechte vordere (15c) und eine hintere Kammer rechten Seite (16c), ein erstes Rohr (18), um die hintere Kammer links (16b) und der rechte vordere Kammer (15c) und eine zweite Leitung (19), die die vordere Kammer gelassen Verbindungs (15b) und die rechte hintere Kammer (16c).

7. Gelenkfahrzeug (1) nach Anspruch 6, **dadurch gekennzeichnet, dass** ein drittes Rohr (20) verbindet das erste Rohr (18) und das zweite Rohr (19).

8. Gelenkfahrzeug (1) nach Anspruch 7, **dadurch gekennzeichnet, dass** das dritte Rohr (20) mit einer Kompensationskammer vorgesehen ist (21).

9. Gelenkfahrzeug (1) nach einem der vorhergehenden Ansprüche, **dadurch gekennzeichnet, dass** der Anhänger (3) eine Plattform (6), die Überhänge mindestens teilweise einen Rahmen (4), der das Zugfahrzeug (2) trägt.

10. Gelenkfahrzeug (1) nach Anspruch 9, **dadurch gekennzeichnet, dass** die Plattform (6) um eine Drehachse drehbar ist, (A1) zwischen der Plattform angeordnet ist (6) und dem Rahmen (4).

## Claims

1. Articulated vehicle (1) comprising a tractor vehicle (2), a trailer (3) and a link system (8) between the tractor vehicle (2) and the trailer (3), the link system (8) comprising a coupling device (9) comprising gripping means (12a, 12b, 12c, 100b, 100c, 14b, 14c) interposed between a chassis (4) of the tractor vehicle (2) and the trailer (3), **characterized in that** the hooking means (12a, 12b, 12c, 100b, 100c, 14b, 14c) comprises at least three D-rings (12a, 12b, 12c) and two ball joints (100b, 100c).

2. Articulated vehicle (1) according to the preceding claim, **characterized in that** the fastening rings (12a, 12b, 12c) are distributed between two planes (P1.P2) which are distinct from each other and parallel between them.

3. Articulated vehicle (1) according to claim 2, **characterized in that** a central plane (P2) comprises a central ring attachment (12a) and **in that** a lateral plane (P1) comprises two lateral rings of hook (12b, 12c).

4. Articulated vehicle (1) according to claim 3, **characterized in that** the center plane (P2) is located at the front side of the plane (P1) in a direction of advance (S) of the vehicle combination (1).

5. Articulated vehicle (1) according to any one of claims 3 and 4, **characterized in that** the hooking means (12a, 12b, 12c, 100b, 100c, 14b, 14c) comprise actuators (14b, 14c) respectively extending between the side coupling rings (12b, 12c) and the ball joints (100b, 100c).

6. Articulated vehicle (1) according to claim 5, **characterized in that** a left cylinder (14b) includes a front chamber left (15b) and a rear left chamber (16b) while the right cylinder (14c) comprises a chamber right front (15c) and a back room right (16c), a first pipe (18) connecting the rear chamber left (16b) and the right front chamber (15c) and a second line (19) connecting the chamber left front (15b) and right rear chamber (16c).

7. Articulated vehicle (1) according to claim 6, **characterized in that** a third pipe (20) connects the first pipe (18) and the second pipe (19).

8. Articulated vehicle (1) according to claim 7, **characterized in that** the third pipe (20) is provided with a compensation chamber (21).

9. Articulated vehicle (1) according to any one of the preceding claims, **characterized in that** the trailer (3) comprises a platform (6) which overhangs at least partially a frame (4) that comprises the tractor vehicle (2).

10. Articulated vehicle (1) according to claim 9, **characterized in that** the platform (6) is rotatable about an axis of rotation (A1) interposed between the platform (6) and the frame (4).
